# EUROPÄISCHE PATENTANMELDUNG

(11) **EP 4 299 231 A1**
(43) Veröffentlichungstag der Anmeldung: **03.01.2024**
(21) Anmeldenummer: 22181936.0
(22) Anmeldetag: 29.06.2022
(51) Int. Cl.: B23K 26/03, B23K 26/08, B23K 26/142, B23K 26/16, B23K 26/38, B23K 26/40, B23K 37/04, B23K 37/047

(54) **VORRICHTUNG UND VERFAHREN ZUM BESCHNEIDEN EINES FOLIENARTIGEN WERKSTÜCKS**

(71) Anmelder: Sonplas GmbH, 94315 Straubing (DE)
(72) Erfinder: WEYH, Lars, 36093 Künzell (DE); SCHMUCK, Benedikt, 94505 Bernried (DE); THALHOFER, Florian, 86863 Langenneufnach (DE)
(74) Vertreter: Wunderlich & Heim Patentanwälte Partnerschaftsgesellschaft mbB

(57) **Zusammenfassung**

Die Erfindung betrifft eine Vorrichtung und ein Verfahren zum Beschneiden eines folienartigen Werkstücks, insbesondere eines Elektrodenblattes, mittels eines Laserstrahls mit einer Spannanordnung für ein blattförmiges Ausgangsmaterial. Nach der Erfindung ist vorgesehen, dass die Spannanordnung eine erste Spannplatteneinrichtung und eine zweite Spannplatteneinrichtung aufweist, zwischen denen das blattförmige Ausgangsmaterial einspannbar ist, wobei zumindest eine Spannplatteneinrichtung ein Außenspanneinheit, welche an eine Außenkontur des Werkstücks angepasst ist und ein Innenabdeckelement aufweist, welches beim Beschneiden innerhalb der Außenspanneinheit angeordnet ist und eine Innenfläche des Werkstücks abdeckt, wobei zwischen der Außenspanneinheit und dem Innenabdeckelement ein Durchtrittsspalt für den Laserstrahl gebildet ist, und dass eine Laserstrahleinrichtung vorgesehen und ausgebildet ist, einen Laserstrahl zu erzeugen und entlang des gebildeten Durchtrittsspaltes zu führen.

## Beschreibung

Die Erfindung betrifft eine Vorrichtung zum Beschneiden eines folienartigen Werkstücks, insbesondere eines Elektrodenblattes, mittels eines Laserstrahls mit einer Spannanordnung für ein blattförmiges Ausgangsmaterial, gemäß dem Oberbegriff des Anspruchs 1.

Die Erfindung betrifft weiterhin ein Verfahren zum Beschneiden eines folienartigen Werkstücks, insbesondere eines Elektrodenblattes, mittels eines Laserstrahls mit einer Vorrichtung mit einer Spannanordnung, gemäß dem Oberbegriff des Anspruchs 12.

Moderne Batterien und Akkumulatoren sind aus einer Vielzahl von sehr dünnen und empfindlichen Elektrodenblättern aufgebaut. Die Elektrodenblättern werden dabei unter Zwischenlegung jeweils einer feinen Membran übereinandergestapelt, um so eine Akkumulatorzelle zu bilden.

Die Elektrodenblätter werden durch Stanzen oder Laserschneiden aus einem Ausgangsmaterial hergestellt und weisen ein Trägerblatt auf, welches mit einer Beschichtung versehen ist. Die empfindlichen Elektrodenblätter müssen in einem hochreinen Zustand verarbeitet werden und dürfen keine Verformungen oder Grate aufweisen. Diese könnten in dem Elektrodenstapel einen Kurzschluss verursachen. Hierdurch wäre die Akkumulatorzelle unbrauchbar oder könnte in Brand geraten.

Derartige Elektrodenblätter werden automatisch bearbeitet und sind sehr sorgfältig und mit großer Vorsicht zu handhaben. Auch Verunreinigungen aus dem Schneidprozess sind zu vermeiden, wobei nötigenfalls aufwendige Reinigungs- und Prüfschritte vorgenommen werden müssen.

Der Erfindung liegt die **Aufgabe** zugrunde, eine Vorrichtung und ein Verfahren anzugeben, mit welchen folienartige Werkstücke besonders schonend und zuverlässig beschnitten werden können.

Die Aufgabe wird zum einen durch eine Vorrichtung mit den Merkmalen des Anspruchs 1 und zum anderen durch ein Verfahren mit den Merkmalen des Anspruchs 12 gelöst. Bevorzugte Ausführungsformen der Erfindung sind in den abhängigen Ansprüchen angegeben.

Eine erfindungsgemäße Vorrichtung ist dadurch gekennzeichnet, dass die Spannanordnung eine erste Spannplatteneinrichtung und eine zweite Spannplatteneinrichtung aufweist, zwischen denen das blattförmige Ausgangsmaterial einspannbar ist, wobei zumindest eine Spannplatteneinrichtung ein Außenspanneinheit, welche an eine Außenkontur des Werkstücks angepasst ist und ein Innenabdeckelement aufweist, welches beim Beschneiden innerhalb der Außenspanneinheit angeordnet ist und eine Innenfläche des Werkstücks abdeckt, wobei zwischen der Außenspanneinheit und dem Innenabdeckelement ein Durchtrittsspalt für den Laserstrahl gebildet ist, und dass eine Laserstrahleinrichtung vorgesehen und ausgebildet ist, einen Laserstrahl zu erzeugen und entlang des gebildeten Durchtrittsspaltes zu führen.

Ein Grundgedanke der Erfindung liegt darin, zum Beschneiden eines folienartigen Werkstücks, insbesondere eines Elektrodenblattes, aus einer Ausgangsfolie oder einer Ausgangsbahn eine Laserstrahleinrichtung einzusetzen. Dabei wird das Werkstück zwischen zwei Spannplatteneinrichtungen von oben und von unten eingespannt. Die beiden Spannplatteneinrichtungen sind dabei jeweils mit einer vorzugsweise plattenartigen Außenspanneinheit und einem vorzugsweise plattenartigen Innenabdeckelement versehen, welche das Werkstück derart abdecken, dass im Wesentlichen nur ein Durchtrittsspalt für den Laserstrahl freibleibt. Der Durchtrittsspalt gibt so eine Außenkontur des zu beschneidenden Werkstücks vor. Die Außenspanneinheit kann das Werkstück teilweise oder vollständig umgrenzen.

Hierdurch wird zunächst ein klar definierter Arbeits- und Schneidbereich für den Laserstrahl vorgegeben. Zudem stellt das Abdecken des Werkstücks durch die zwei Spannplatteneinrichtungen außerhalb des Trennspaltes sicher, dass sich keine verdampften oder abgesprengten Materialpartikel, welche bei einer Laserstrahlbearbeitung entstehen können, auf den Werkstückoberflächen absetzen. So kann ein ansonsten notwendiger Reinigungsaufwand der Werkstücke nach dem Laserschneiden entfallen oder zumindest stark reduziert werden. Durch die erfindungsgemäße Vorrichtung kann eine Qualität des beschnittenen Werkstücks erhöht und die Bearbeitung vereinfacht werden.

Eine bevorzugte Ausführungsvariante der Erfindung besteht darin, dass das Innenabdeckelement plattenförmig und getrennt von der Außenspanneinheit ausgebildet ist. Somit kann das Werkstück beispielsweise zuerst mit der Außenspanneinheit und dann mit dem Innenabdeckelement oder umgekehrt gespannt werden.

Besonders vorteilhaft ist es nach einer Weiterbildung der Erfindung, dass das Innenabdeckelement eine Halteeinrichtung zum Halten des beschnittenen Werkstücks aufweist. Somit kann, wenn das folienartige Werkstück vollständig aus dem Ausgangsmaterial ausgeschnitten ist, dieses durch die Halteeinrichtung in seiner Lage gesichert werden. Dies ist für eine weitere Handhabung des Werkstücks vorteilhaft.

Besonders bevorzugt ist es nach einer Ausführungsvariante der Erfindung, dass die Halteeinrichtung eine Ansaugeinrichtung, insbesondere eine Vakuumplatte, aufweist. Das Innenabdeckelement kann dabei insgesamt oder zum Teil als eine Vakuumplatte ausgebildet sein, welche mit einer Unterdruckeinheit in Leitungsverbindung steht. Über entsprechende Kanäle und Öffnungen kann so ein Unterdruck erzeugt werden, mit welchem das folienartige Werkstück an dem aufliegenden Innenabdeckelement gehalten wird. Ein derartiges Halten mittels einer Ansaugeinrichtung ist besonders schonend, so dass es auch bei sehr dünnen und empfindlichen folienartigen Werkstücken eingesetzt werden kann.

Eine weitere vorteilhafte Ausführungsform der Erfindung besteht darin, dass das Innenabdeckelement mit der Halteeinrichtung zum Greifen und Verfahren des beschnittenen Werkstücks ausgebildet ist. Das Innenabdeckelement mit der Halteeinrichtung kann so das beschnittene Werkstück an dem Innenabdeckelement halten und durch eine entsprechende Verfahr- oder Bewegungseinrichtung das Innenabdeckelement mit der Halteeinrichtung und dem damit gegriffenen oder gehaltenen Werkstück zu einem weiteren Bearbeitungsschritt oder zu einer Abgabeposition aus der Vorrichtung heraus transportiert werden. Eine derartige Handhabung ist ebenfalls besonders schonend, so dass diese auch für besonders dünne und empfindliche Werkstücke geeignet ist.

Eine weitere Verbesserung gegen eine Verunreinigung der Werkstücke wird nach einer weiteren Ausgestaltung der Erfindung dadurch erzielt, dass entlang dem Durchtrittsspalt an der Außenspanneinheit oder der Innenabdeckung ein oder mehrere Düsen zum Absaugen und/oder Abblasen von Abtragspartikeln beim Beschneiden mittels des Laserstrahls angeordnet sind. Anders als bei der Halteeinrichtung mit einer Vakuumplatte erfolgt durch die Absaugeinrichtung kein leichtes Ansaugen und das Erzeugen eines Unterdrucks zum Halten des Werkstücks. Vielmehr wird unmittelbar bei dem Schneidvorgang mittels des Lasers verdampftes und abgeplatztes Material, also Abtragspartikel, unmittelbar am Schneidspalt zusammen mit Umgebungsluft abgesaugt. Alternativ oder ergänzend kann ein Abblasluftstrom mittels einer Abblaseinrichtung erzeugt werden. Somit können sich Abtragspartikel weder am Werkstück noch an der freien Oberfläche an der Vorrichtung niederschlagen. Dies reduziert ebenfalls einen Reinigungs- und Wartungsaufwand sowohl an den Werkstücken als auch an der Vorrichtung. Hierzu kann mit oder ohne aktives Anblasen insbesondere ein scharfer Luftstrom mit einer relativ hohen Strömungsgeschwindigkeit von bis zu 300 m pro Sekunde, vorzugsweise zwischen 200 und 300 m pro Sekunde, erzeugt werden. Dies erlaubt ein besonders zuverlässiges und umfassendes Absaugen von mit Abtragspartikeln kontaminierter Luft und/oder Abblasen der Abtragspartikeln. Abhängig vom Layout des folienartigen Werkstücks kann der Durchtrittsspalt eine C-Geometrie (mit drei Seiten) oder eine sonstige Form aufweisen.

Besonders vorteilhaft ist es dabei, dass mindestens eine Düse als eine Schlitzdüse mit einem länglichen Öffnungsschlitz ausgebildet ist, welcher sich entlang des Durchtrittsspalts erstreckt. Die Schlitzdüse mit dem länglichen Öffnungsschlitz ist dabei an mindestens einem Element der Außenspanneinheit oder dem Innenabdeckelement entlang zumindest eines Abschnitts des Durchtrittsspaltes angeordnet und dem Durchtrittsspalt zugewandt ist. Die Außenspanneinheit kann dabei aus mehreren Elementen oder Komponenten aufgebaut sein, welche zusammen eine Außenkontur des zu beschneidenden Werkstücks umfassen.

An einem Teil oder an allen dieser Komponenten der Außenspanneinheit oder dem Innenabdeckelement kann eine Schlitzdüse ausgebildet sein, so dass unmittelbar an der Abtragsstelle des Werkstückmaterials durch den Laser die mit Abtragspartikeln kontaminierte Luft abgesaugt werden kann.

Besonders bevorzugt ist es dabei, dass die Außenspanneinheit oder dem Innenabdeckelement mehrere Absaugplatten mit Düsen aufweist. Die Düsenplatten weisen dabei mindestens einen Strömungskanal oder eine Luftleitung auf, welche mit der mindestens einen Düse, insbesondere einer Schlitzdüse, verbunden sind. Die Düsenplatten stehen mit einer entsprechenden Saugeinrichtung und/oder einer Strömungseinrichtung, etwa einem Gebläse, in Leitungsverbindung. An der Saugeinrichtung kann eine Filtereinheit oder eine sonstige Abtrenneinheit zum Reinigen der kontaminierten Luft von den Abtragspartikeln vorgesehen sein.

Eine weitere Verbesserung der Bearbeitung an einem folienartigen Werkstück kann dadurch erzielt werden, dass eine Zuführeinrichtung zum Zuführen eines zu beschneidenden Werkstücks vorgesehen ist, wobei mit Zuführeinrichtung das Werkstück zwischen die zwei Spannplatteneinrichtungen zuführbar ist. Die Zuführeinrichtung kann dabei in jeder geeigneten Weise ausgebildet sein, etwa mit angetriebenen Förderrädern oder Förderbändern für einen schonenden Transport eines folienartigen Ausgangsmaterials. Das Ausgangsmaterial kann insbesondere ein Bahnmaterial sein, welches von einem Coil abgespult und über die Zuführeinrichtung zum Bearbeiten und Beschneiden zugefördert wird. Dies erlaubt ein besonders schonendes Zuführen des empfindlichen Ausgangsmaterials.

Besonders vorteilhaft ist es weiterhin, dass die erste Spannplatteneinrichtung und die zweite Spannplatteneinrichtung zum Spannen des Werkstücks relativ aufeinander zu beziehungsweise voneinander weg verfahrbar sind. Hierzu kann eine geeignete Stelleinrichtung vorgesehen sein, welche vorzugsweise einen oder mehrere Stellzylinder aufweist. Die Stellzylinder können vorzugsweise pneumatisch oder hydraulisch betrieben sein.

Nach einer weiteren Ausgestaltung der Erfindung ist es bevorzugt, dass eine Kameraeinrichtung zum Erfassen des Werkstücks, insbesondere einer Position des Werkstücks, angeordnet ist. Die Kameraeinrichtung kann dabei insbesondere eine Kamera aufweisen, welche oberhalb des Werkstücks in der Bearbeitungsposition ist. Über die Kameraeinrichtung kann so die exakte Positionierung des Werkstücks vor dem Beginn des Beschneidens und/oder eine fertiggeschnittene Kontur des Werkstücks nach dem Beschneiden erfasst und vorzugsweise an eine elektronische Auswerteeinheit gesandt werden. Durch die Auswerteeinheit kann eine korrekte Arbeitsabfolge und ein korrektes Arbeitsergebnis ermittelt und verifiziert werden.

Die Erfindung betrifft weiterhin ein Verfahren zum Beschneiden eines folienartigen Werkstücks, insbesondere mit der zuvor beschriebenen Vorrichtung, wobei das Verfahren dadurch gekennzeichnet ist, dass die Spannanordnung eine erste Spannplatteneinrichtung und eine zweite Spannplatteneinrichtung aufweist, zwischen denen das blattförmige Ausgangsmaterial eingespannt wird, das mindestens eine Spannplatteneinrichtung eine Außenspanneinheit, welche an einer Außenkontur des Werkstücks angepasst ist, und ein Innenabdeckelement aufweist, welches zum Beschneiden innerhalb der Außenspanneinheit angeordnet wird und eine Innenfläche des Werkstücks abdeckt, wobei zwischen der Außenspanneinheit und dem Innenabdeckelement ein Durchtrittsspalt für den Laserstrahl gebildet wird, und dass eine Laserstrahleinrichtung vorgesehen ist, mit welcher ein Laserstrahl erzeugt und entlang des gebildeten Durchtrittsspaltes geführt wird.

Das erfindungsgemäße Verfahren kann insbesondere mit der zuvor beschriebenen Vorrichtung durchgeführt werden. Es können die dabei zuvor beschriebenen Vorteile erzielt werden.

Eine vorteilhafte Verfahrensvariante besteht darin, dass zum Beschneiden ein Laserstrahl eine Oberfläche des Werkstücks entlang des Durchtrittspaltes zum Abtragen von Werkstückmaterial überläuft und dass zum Abtrennen des Werkstücks ein oder mehrere Überläufe, insbesondere zwei oder drei Überläufe, durchgeführt werden. Auch bei dünnen Werkstücken kann mit einem mehrmaligen Überlaufen ein genaueres und schonenderes Trennen des Werkstücks erzielt werden. Insbesondere kann die Wärmeeintragsleistung des Lasers in das Werkstück je Schneidvorgang reduziert werden, wodurch sich auch eine grundsätzlich unerwünschte Wärmeeinflusszone in angrenzende Werkstückbereiche entsprechend reduziert.

Die Erfindung wird nachfolgend anhand eines bevorzugten Ausführungsbeispiels weiter beschrieben, welches schematisch in den Zeichnungen dargestellt ist. In den Zeichnungen zeigen:
- Fig. 1: eine perspektivische Ansicht einer erfindungsgemäßen Vorrichtung;
- Fig. 2: eine Seitenansicht der Vorrichtung von Figur 1 ;
- Fig. 3: eine Vorderansicht der Vorrichtung nach den Figuren 1 und 2; und
- Fig. 4: eine Draufsicht der Vorrichtung der Figuren 1 bis 3 von oben.

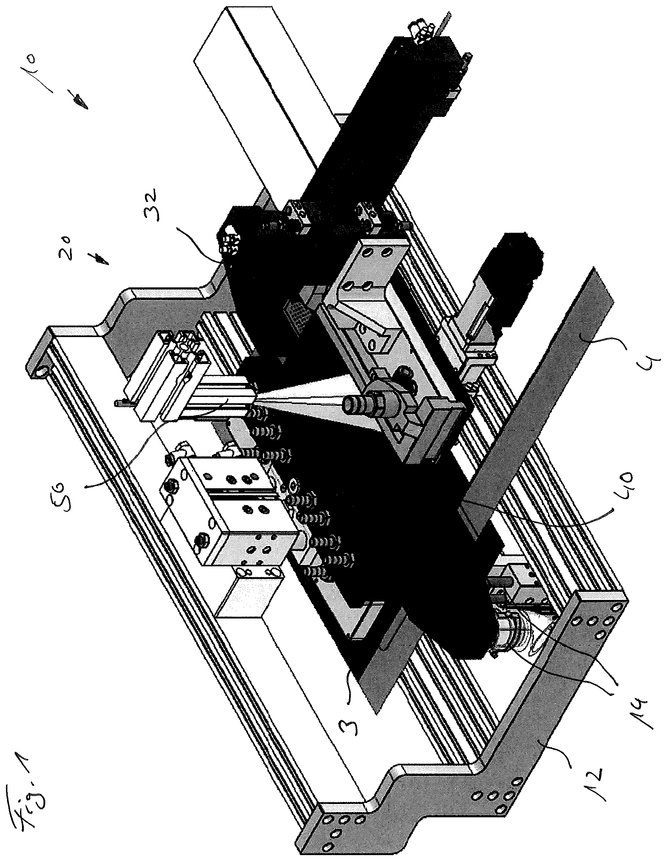

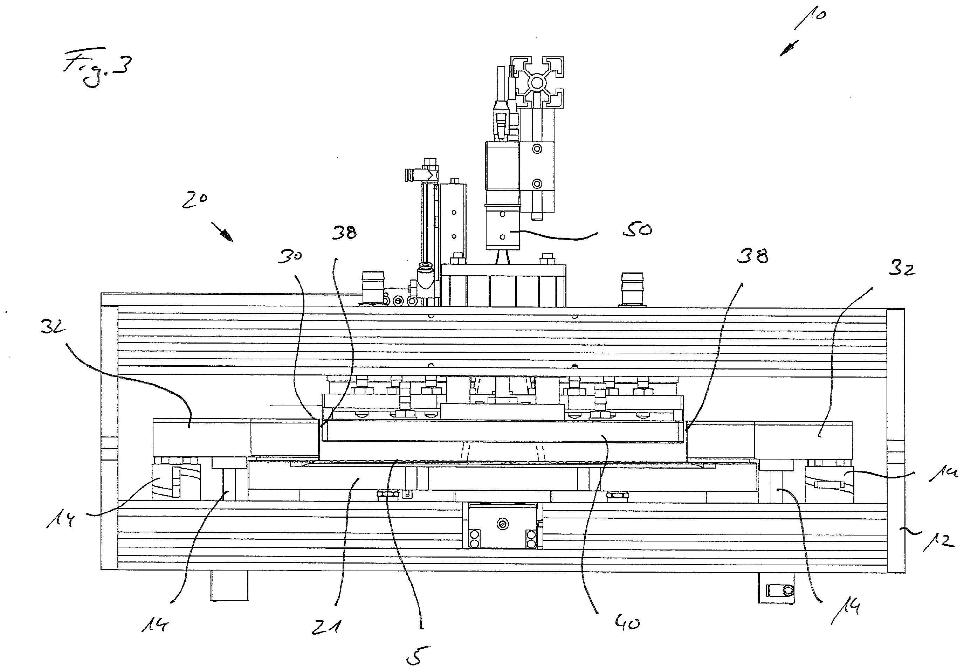

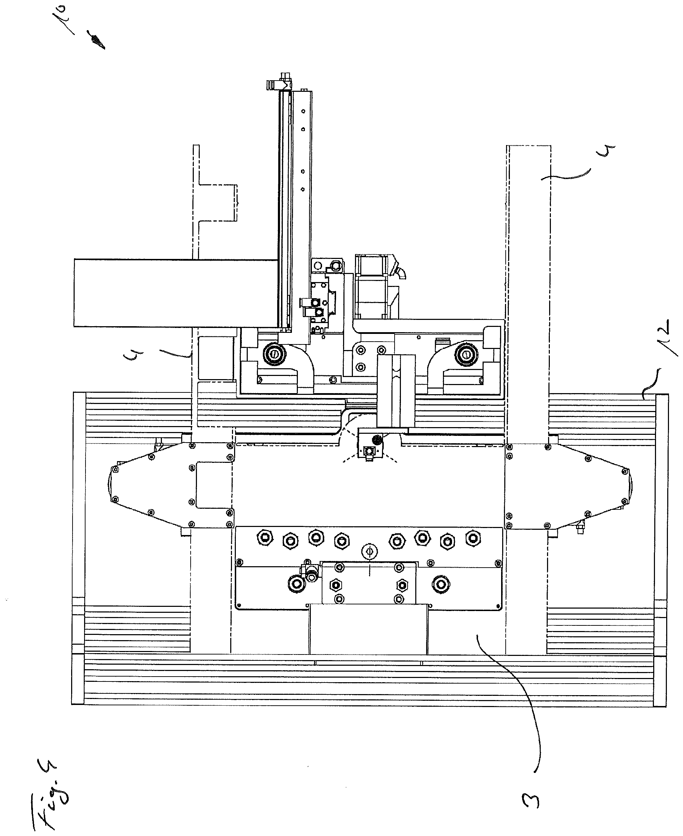

Eine mögliche Ausführungsform einer erfindungsgemäßen Vorrichtung 10 wird in Zusammenhang mit den Figuren 1 bis 4 nachfolgend erläutert. Die Vorrichtung 10 weist einen Grundrahmen 12 mit einer mittigen Spannanordnung 20 auf. Die Spannanordnung 20 umfasst eine untere erste Spannplatteneinrichtung 21 und eine darüberliegend angeordnete zweite Spannplatteneinrichtung 30 auf. Zwischen den beiden Spannplatteneinrichtungen 21, 30 wird mittels einer nicht näher dargestellten Zuführeinrichtung ein bahnförmiges oder blattförmiges Ausgangsmaterial 3 zugefördert. Das Ausgangsmaterial 3 kann zum Bilden eines sogenannten Elektrodenblattes als ein herzustellendes Werkstück 5 ausgebildet sein. Ein seitlicher Besaumrest 4 kann aus der Vorrichtung 10 abgeführt werden.

Durch ein relatives Aufeinanderzufahren der ersten Spannplatteneinrichtung 21 und/oder der zweiten Spannplatteneinrichtung 30 über vertikal gerichtete Hubelemente 14 kann das Ausgangsmaterial 3 zwischen der unteren ersten Spannplatteneinrichtung 21 und der oberen zweiten Spannplatteneinrichtung 30 eingespannt sein. Die untere erste Spannplatteneinrichtung 21 kann im Wesentlichen als eine durchgehende Aufnahmeplatte oder auch mehrteilig ausgeführt sein.

In dem dargestellten Ausführungsbeispiel kann die zweite Spannplatteneinrichtung 30 eine plattenförmige Außenspanneinheit 32 aufweisen, welche an eine Außenkontur des zu bildenden Werkstücks 5 angepasst ist und diese teilweise oder vollständig vorgibt.

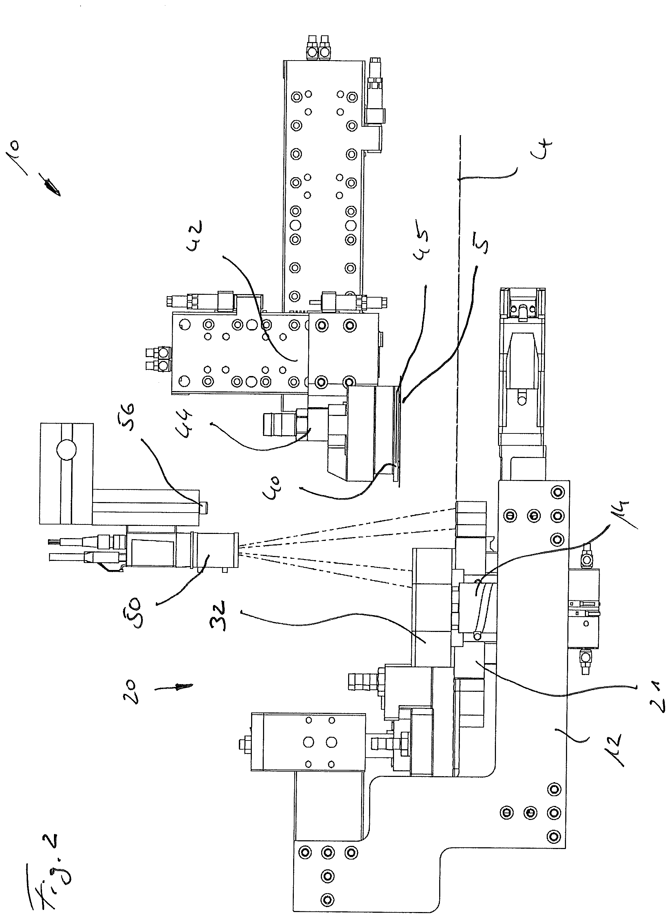

Weiterhin kann die zweite Spannplatteneinrichtung 30 ein plattenförmiges Innenabdeckelement 40 aufweisen, welches als eine Halteeinrichtung 42 zum Halten und Verfahren des geschnittenen Werkstücks 3 ausgebildet ist, wie besonders anschaulich aus Fig. 2 hervorgeht. Die Halteeinrichtung 42 kann dabei mit einer Ansaugeinrichtung 44 mit einer Vakuumplatte 45 versehen sein, welche kleine Ansaugöffnungen in einem Kontaktbereich zu dem blattförmigen Werkstück 5 aufweist. Hierdurch kann das dünne und empfindliche Werkstück 5 schonend angesaugt und an der Halteeinrichtung 42 gehalten und damit aus der Vorrichtung 10 abtransportiert werden. Die Halteeinrichtung 42 mit einem Haltearm kann vorzugsweise automatisch koppelbar und lösbar zu dem plattenförmigen Innenabdeckelement 40 sein.

Die Außenspanneinheit 32 und das plattenförmige Innenabdeckelement 40 sind hinsichtlich ihrer Dimensionierung so aufeinander abgestimmt, dass zwischen der außenliegenden Außenspanneinheit 32 und dem innenliegenden Abdeckelement 40 ein schmaler Durchtrittsspalt 38 zum Beschneiden der Werkstückkontur verbleibt.

Mittels einer Laserstrahleinrichtung 50 oberhalb der Spannanordnung 20 können ein oder mehrere Laserstrahlen, welche in den Figuren angedeutet sind, erzeugt werden, welche in einem oder mehreren Überläufen entlang des Durchtrittsspaltes 38 entlang der Oberfläche des Werkstücks 5 geführt werden, so dass dieses von dem bandförmigen Ausgangsmaterial 3 schonend und zugleich präzise abgetrennt wird.

Während des Beschneidens kann über nicht näher dargestellte Düsen, welche insbesondere als längliche Schlitzdüsen ausgeführt sein können, kontaminierte Luft mit verdampften oder abgesprengten Werkstückmaterialpartikeln nahe am Bearbeitungsort abgesaugt und/oder die Partikel abgesaugt werden. Hierdurch können Verunreinigungen des Werkstücks 5 sowie der Vorrichtung 10 insgesamt vermieden oder gering gehalten werden.

Mittels einer Kameraeinrichtung 56, welche nahe zu der Lasereinrichtung 50 oberhalb der Spannanordnung 20 vorgesehen sein kann, kann eine Position des Werkstücks 5 vor und nach der Bearbeitung und/oder ein Schnittergebnis nach dem Beschneiden erfasst werden. Die Kameraeinrichtung 56 kann dabei mit einer nicht dargestellten Steuerungs- und Auswerteeinheit verbunden sein.

## Patentansprüche

1. Vorrichtung zum Beschneiden eines folienartigen Werkstücks (5), insbesondere eines Elektrodenblattes, mittels eines Laserstrahls mit einer Spannanordnung (20) für ein blattförmiges Ausgangsmaterial (3),
**dadurch gekennzeichnet,**
**dass** die Spannanordnung (20) eine erste Spannplatteneinrichtung (21) und eine zweite Spannplatteneinrichtung (30) aufweist, zwischen denen das blattförmige Ausgangsmaterial (3) einspannbar ist, wobei zumindest eine Spannplatteneinrichtung (30) eine Außenspanneinheit (32), welche an eine Außenkontur des Werkstücks (5) angepasst ist und ein Innenabdeckelement (40) aufweist, welches beim Beschneiden innerhalb der Außenspanneinheit (32) angeordnet ist und eine Innenfläche des Werkstücks (5) abdeckt, wobei zwischen der Außenspanneinheit (32) und dem Innenabdeckelement (40) ein Durchtrittsspalt (38) für den Laserstrahl gebildet ist, und
**dass** eine Laserstrahleinrichtung (50) vorgesehen und ausgebildet ist, einen Laserstrahl zu erzeugen und entlang des gebildeten Durchtrittsspaltes (38) zu führen.

2. Vorrichtung nach Anspruch 1,
**dadurch gekennzeichnet,**
**dass** das Innenabdeckelement plattenförmig und getrennt von der Außenspanneinheit ausgebildet ist.

3. Vorrichtung nach Anspruch 1 oder 2,
**dadurch gekennzeichnet,**
**dass** das Innenabdeckelement (40) eine Halteeinrichtung (42) zum Halten des beschnittenen Werkstücks (5) aufweist.

4. Vorrichtung nach Anspruch 3,
**dadurch gekennzeichnet,**
**dass** die Halteeinrichtung (42) eine Ansaugeinrichtung (44), insbesondere eine Vakuumplatte (45), aufweist.

5. Vorrichtung nach Anspruch 3 oder 4,
**dadurch gekennzeichnet,**
**dass** das Innenabdeckelement (40) mit der Halteeinrichtung (42) zum Greifen und Verfahren des beschnittenen Werkstücks (5) ausgebildet ist.

6. Vorrichtung nach einem der Ansprüche 1 bis 5,
**dadurch gekennzeichnet,**
**dass** entlang dem Durchtrittsspalt (38) an der Außenspanneinheit (32) und/oder dem Innenabdeckelement (40) ein oder mehrere Düsen zum Absaugen und/oder Abblasen von Abtragspartikeln beim Beschneiden mittels des Laserstrahls angeordnet sind.

7. Vorrichtung nach Anspruch 6,
**dadurch gekennzeichnet,**
**dass** mindestens eine Düse als eine Schlitzdüse mit einem länglichen Öffnungsschlitz ausgebildet ist, welcher sich entlang des Durchtrittsspalts (38) erstreckt.

8. Vorrichtung nach Anspruch 6 oder 7,
**dadurch gekennzeichnet,**
**dass** die Außenspanneinheit (32) mehrere Düsenplatten mit Düsen aufweist.

9. Vorrichtung nach einem der Ansprüche 1 bis 8,
**dadurch gekennzeichnet,**
**dass** eine Zuführeinrichtung zum Zuführen eines zu beschneidenden Werkstücks (5) vorgesehen ist, wobei mit der Zuführeinrichtung das Werkstück (5) zwischen die zwei Spannplatteneinrichtungen (21, 30) zuführbar ist.

10. Vorrichtung nach einem der Ansprüche 1 bis 9,
**dadurch gekennzeichnet,**
**dass** die erste Spannplatteneinrichtung (21) und die zweite Spannplatteneinrichtung (30) zum Spannen des Werkstücks (5) relativ aufeinander zu beziehungsweise voneinander weg verfahrbar sind.

11. Vorrichtung nach einem der Ansprüche 1 bis 10,
**dadurch gekennzeichnet,**
**dass** eine Kameraeinrichtung (56) zum Erfassen des Werkstücks (5), insbesondere einer Position des Werkstücks (5), angeordnet ist.

12. Verfahren zum Beschneiden eines folienartigen Werkstücks (5), insbesondere eines Elektrodenblattes, mittels eines Laserstrahls mit einer Vorrichtung (10) mit einer Spannanordnung (20), insbesondere nach einem der Ansprüche 1 bis 11,
**dadurch gekennzeichnet,**
**dass** die Spannanordnung (20) eine erste Spannplatteneinrichtung (21) und eine zweite Spannplatteneinrichtung (30) aufweist, zwischen denen das blattförmige Ausgangsmaterial (3) eingespannt wird,
**dass** zumindest eine Spannplatteneinrichtung (30) eine Außenspanneinheit (32), welche an einer Außenkontur des Werkstücks (5) angepasst ist, und ein Innenabdeckelement (40) aufweist, welches zum Beschneiden innerhalb der Außenspanneinheit (32) angeordnet wird und eine Innenfläche des Werkstücks (5) abdeckt, wobei zwischen der Außenspanneinheit (32) und dem Innenabdeckelement (40) ein Durchtrittsspalt (38) für den Laserstrahl gebildet wird, und
**dass** eine Laserstrahleinrichtung (50) vorgesehen ist, mit welcher ein Laserstrahl erzeugt und entlang des gebildeten Durchtrittsspaltes (38) geführt wird.

13. Verfahren nach Anspruch 12,
**dadurch gekennzeichnet,**
**dass** zum Beschneiden ein Laserstrahl eine Oberfläche des Werkstücks (5) entlang des Durchtrittsspaltes (38) zum Abtragen von Werkstückmaterial überläuft und
**dass** zum Abtrennen des Werkstücks (5) ein oder mehrere Überläufe, insbesondere zwei oder drei Überläufe, durchgeführt werden.
